# EUROPEAN PATENT APPLICATION

(11) **EP 1 274 033 A1**
(43) Date of publication of application: **08.01.2003**
(21) Application number: 02014793.0
(22) Date of filing: 04.07.2002
(51) Int. Cl.: G06F 17/60

(54) **System, computer program, and device of handling data to be used for returning items**

(30) Priority: 05.07.2001 EP 01116316
(71) Applicant: CANON EUROPA N.V., NL-1185 XB Amstelveen (NL)
(72) Inventor: Mol van Otterloo, Marten, c/o Canon Europa N.V., 1185 XB Amstelveen (NL)
(74) Representative: Böckelen, Rainer

(57) **Abstract**

This invention introduces, as one aspect, a system for handling data to be used for returning items, which comprises means for creating label data representing a label to be printed for returning an item from a customer, the label data including unique data, means for sending the label data to a customer, means for receiving identification data identifying an item to be returned by the customer, means for storing the identification data in association with the unique data, means for receiving identifying data from a returned item, means for checking the received identifying data from the returned item to decide whether the returned item is proper or not by referring to the identification data stored in said storing means, and means for calling the unique data associated with the identification data if said checking means decides that the returned item is improper. Accordingly, usage of the label copied, modified, stolen, exchanged or faked would be significantly minimised with a little additional cost. Further, checking identification of a returned item, the problem caused by transferring other items or fake items can be solved.

## Description

### FIELD OF THE INVENTION

This invention relates to a system, a set of computer programmes and a device of handling data to be used for returning items. Especially, this invention relates, but is not limited, to returning recyclable items containing consumables, such as toner cartridges, ink bottles and so on.

### BACKGROUND OF THE INVENTION

Recently, collecting recyclable items such as toner cartridges, inkbottles from customers becomes much more important. For instance, after using toner itself, empty cartridges obviously become disposals. However, some of parts can be reused and some manufacturers have already prepared a plant or a recycle centre to fabricate new toner cartridges filled by toner.

Then, the manufacturer can use such empty cartridge efficiently and can save costs. Also these activities cause good for the environment and advertisements for these activities make customers conscious of importance of recycling.

One of ordinary methods to collect such items is to enclose a pre-authorised label in a container of a new cartridge. Customers can use the label to return their consumed cartridges by using the label, namely the customers can bring empty cartridges to the carrier, for example a post office, a transport firm and so on, to send them to the predetermined plants or other destinations by free. Therefore, the label itself must be pre-authorised by the carrier and the manufacturer. The label has to have information of the name of the carrier, destination to be transported, and identification or certification representing pre-authorisation.

This kind of method has actually worked well and encouraged customers to return their empty cartridges. However, this method includes some drawbacks as follows.

Firstly, the manufacturer has to make sure about customers' locations and suitable carrier service at the timing of shipping new cartridges and enclose suitable labels for each cartridge. This obviously causes significant workload and relating costs. Accordingly, this kind of method is difficult to be used for collecting small and cheap cartridges or small inkbottles.

Secondly, this may cause customer's workload when the customer moves his or her location. What has to be done is either the manufacturer sends a new label upon request of the customer or the customer brings his or her consumed cartridges to the carrier located close to the previous location of the customer. This also causes significant workload on both manufacturers and customers and can discourage from returning items.

Thirdly, the label can be modified, copied or faked. These kinds of conducts may cause significant damage to both manufacturers and carriers. Of course, detecting such modification, copying, or the like can be possible by utilising certain methods. However, this means all of the carriers have to have instruments to realise such methods and certain amount of database storing customers' information. This also causes significant cost for collecting recyclable items.

Further, if somebody uses the proper label for transferring other items or fake cartridges, this also causes damages.

Recently some ideas are raised by utilising the network and Web Sites. For example, [4172029] shows the way to utilising Internet for collecting empty cartridges. The use of the Internet and Web Site resolves some of the drawbacks set out above.

In short, if the manufacturer can send a label to each customer via Web Site, it is obvious to resolve the problem of workload for enclosing labels and confirming customer's location. This method also resolves the problem caused by the relocation of customer, since the customer can request a label via Web Site with informing the new location.

However, this method cannot solve the problem caused by the possibility of modifying, copying, and faking labels, rather this method enlarge this kind of problem. For example, the customer can easily print a label several times. Since the printed label printed by printers owned by customers has normally lower quality and lower resolution than that printed by the printing company, it becomes easier to manipulate, modify, or fake the label.

Further, this method does not solve the problem caused by sending other items or fake cartridges by using the label.

### SUMMARY OF THE INVENTION

This invention had been done for resolving drawbacks described above.

The object of this invention is to prevent a system for returning items from being affected by copied, modified, stolen, exchanged or faked labels to be used for returning items, transferred other items, or fake cartridges.

Another object of this invention is to minimise the cost to encourage customers to return their consumed items without significant additional workloads of the manufacturer and customer.

To accomplish the above objects, this invention introduces, as one aspect, a system for handling data to be used for returning items, which comprises means for creating label data representing a label to be printed for returning an item from a customer, the label data including unique data, means for sending the label data to a customer, means for receiving identification data identifying an item to be returned by the customer, means for storing the identification data in association with the unique data, means for receiving identifying data from a returned item, means for checking the received identifying data from the returned item to decide whether the returned item is proper or not by referring to the identification data stored in said storing means, and means for calling the unique data associated with the identification data if said checking means decides that the returned item is improper.

According to this system, transferred other items, fake cartridges, exchanged labels or stolen labels are easily found and it is prevented to cause damages to both manufacturer and recycling centre.

As further aspect of this invention, this invention introduces a set of computer programmes for handling data to be used for returning items, which comprises programme for creating label data representing a label to be printed for returning an item from a customer, the label data including unique data, programme for sending the label data to a customer, programme for receiving identification data identifying an item to be returned by the customer, programme for storing the identification data in association with the unique data in a storage, programme for receiving identifying data from a returned item, programme for checking the received identifying data from the returned item to decide whether the returned item is proper or not by referring to the identification data stored by the storage, and programme for calling the unique data associated with the identification data if said checking programme decides that the returned item is improper.

Other features or aspects would be clarified by following detailed embodiments with reference to the drawings.

### BRIEF DESCRIPTION OF THE DRAWINGS

Figure 1 shows a block diagram showing elements of an example of a whole network system in which this invention is implemented.
Figure 2 shows a time chart of processes carried out for sending a label to the customer in the system shown in Figure 1.
Figure 3 shows a flow chart representing programmes executed by the server of the manufacturer shown in Figure 1 to realise the processes shown in Figure 2.
Figure 4 shows a displayed page for customers, by the programmes corresponding to Figure 3, to be used for inputting whether the customer has been already registered or not.
Figure 5 shows a displayed page for customers, by the programmes corresponding to Figure 3, to be used for inputting customer's information.
Figure 6 shows a displayed page for customers, by the programmes corresponding to Figure 3, to confirm the registration.
Figure 7 shows a displayed page for customers, by the programmes corresponding to Figure 3, to be used for inputting registered information of the customer.
Figure 8 shows a label affixed onto cartridges.
Figure 9 shows a label printed in accordance with the programmes corresponding to Figure 3.
Figure 10 shows a time chart of processes carried out for checking a label to be used in the system shown in Figure 1.
Figure 11 shows a flow chart representing programmes executed by the server of the manufacturer shown in Figure 1 to realise the processes shown in Figure 10.
Figure 12 shows a time chart of processes carried out for checking a label affixing to the cartridge.
Figure 13 shows a flow chart representing programmes executed by the server of the manufacturer shown in Figure 1 to realise the processes shown in Figure 12.

### DEATAILED DESCRIPTION OF PREFERRED EMBODIMENTS

To make it easy to implement this invention, only some of embodiments or aspects of this invention are described as below.

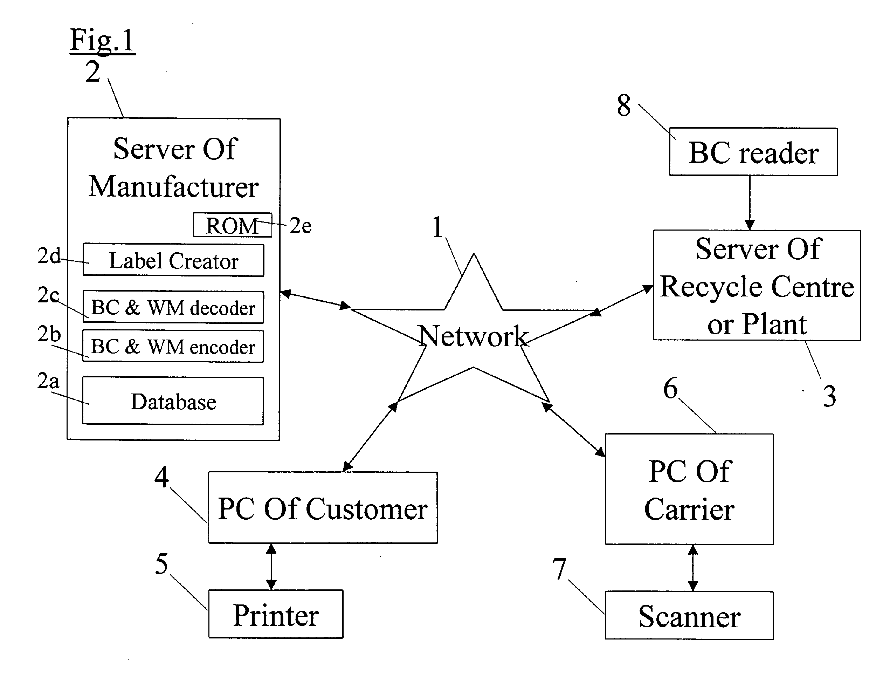

Figure 1 shows a network system connected to a plurality of computers located in some instruments. In this specification, the word "computer" will sometimes be used as a central processing unit (CPU) itself or one including surrounding hardware and software. According to these embodiments, a network 1 shall connect at least a computer located in a server of manufacturer (hereinafter "Manufacturer Server") 2, a computer located in a personal computer of the customer (hereinafter "Customer PC") 4, a computer located in a server of the recycle centre or plant (hereinafter "Plant Server") 3, and a computer located in a personal computer of the carrier (hereinafter "Carrier PC") 6.

Besides, although only one Carrier PC 6 and one Plant Sever 3 are shown in the Figure 1, there are a plurality of Carrier PCs and Plant Servers connected to the network 1.

The personal computer used in this specification means a set of instruments including a display, an input device, such as a keyboard and a mouse, a CPU, a disc drive and others inherently included in the personal computer. Customer PC 4 is connected to a printer 5 and Carrier PC 6 is connected to a scanner 7. The Plant Server 3 is connected to a barcode reader (BC reader) 8.

The server used in this specification means a set of devices including a computer and other electric instruments prepared so as to create a Web Site producing one or more Web Pages composed of texts, pictures, photographs, and/or objects to be displayed. The Manufacturer Server 2 includes a database 2a in which information of the customer is stored, an encoder 2b for encoding information to create barcodes (BC) and watermarks (WM), a decoder 2c for decoding BC and WM for restoring the original information, and a label creator 2d for creating image data of the label to be sent including the information encoded by the encoder 2b. The database 2a further stores all serial numbers of shipped cartridges that have been distributed from the manufacturer.

Programmes, which control processes executed by the Manufacturer Server, are stored in a ROM 2e, located in the Manufacturer Server 2, and are read in accordance with proceeding processes. Similarly, programmes controlling processes executed by the Customer PC 4, the Carrier PC 6, and the Plant Server 3 are stored therein, although memories are not shown in the Customer PC 4, the Carrier PC 6, and the Plant Server 3 of the Figure 1.

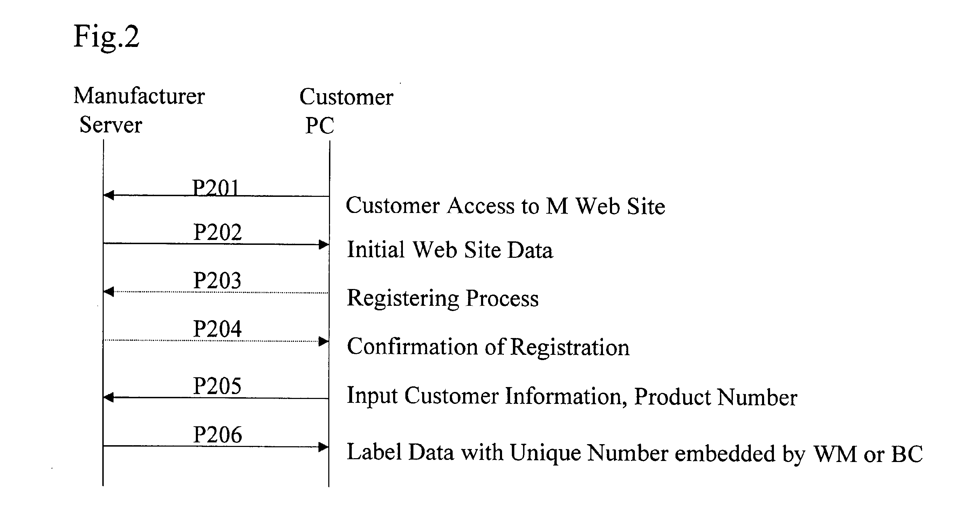

Firstly, for making understanding easy, rough processes are described by referring to Figure 2. Figure 2 represents the order of processes, which have to be carried out for sending a label to the Customer PC 4 in the system shown in Figure 1. A process P201 represents an access made by the customer (Customer PC 4) and a process P202 represents sending an initial Web Page to the Customer PC 4.

If the customer has already been properly registered, the customer can input his or her information at a process P205. However, if the customer has not been registered, registering processes P203 and P204 are taken. The process P203 represents sending information necessary to register the customer and the process P204 represents sending the information for confirming the registration.

The process P205 represents sending information about customer including Product Number, including such as a name of the product (printer), a serial number thereof and serial numbers of cartridges to be returned. The information sent at the process P205 is described later. If the information sent in the process P205 is appropriate, the Manufacturer Server sends the Label Data representing a label to be used for returning items. In this embodiment, such Label Information is sent with additional information embedded by using barcodes or watermarks.

Obviously, there exist many correspondences between the Manufacturer Server 2 and Customer PC 4. However, in the Figure 2, such correspondences are often now shown, but described below.

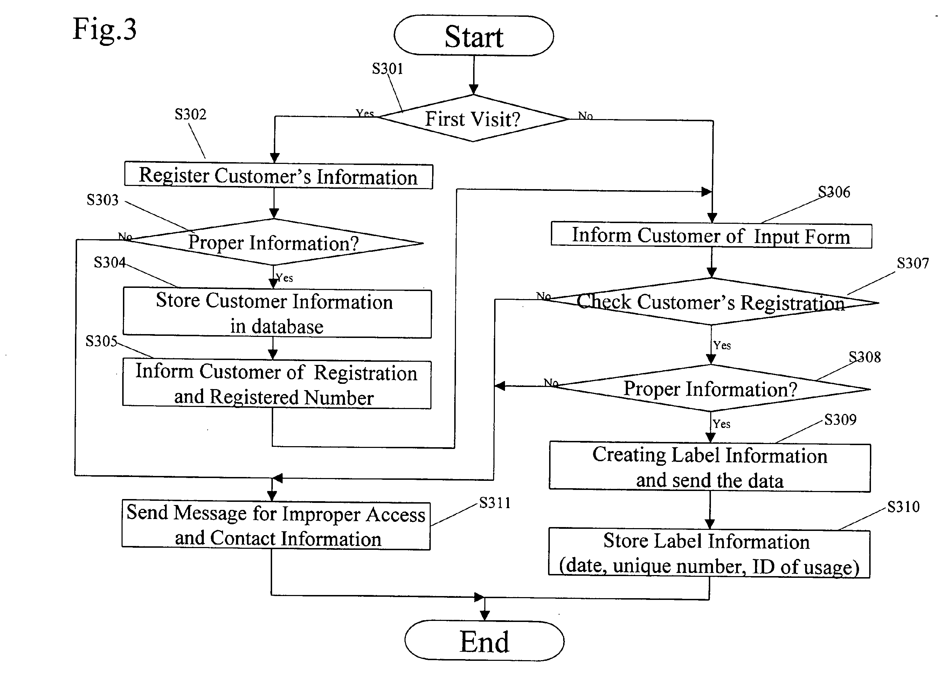

To make these processes carried out in this embodiment detailed, concrete processes carried out in this embodiment are now described by using Figures 3 through 8.

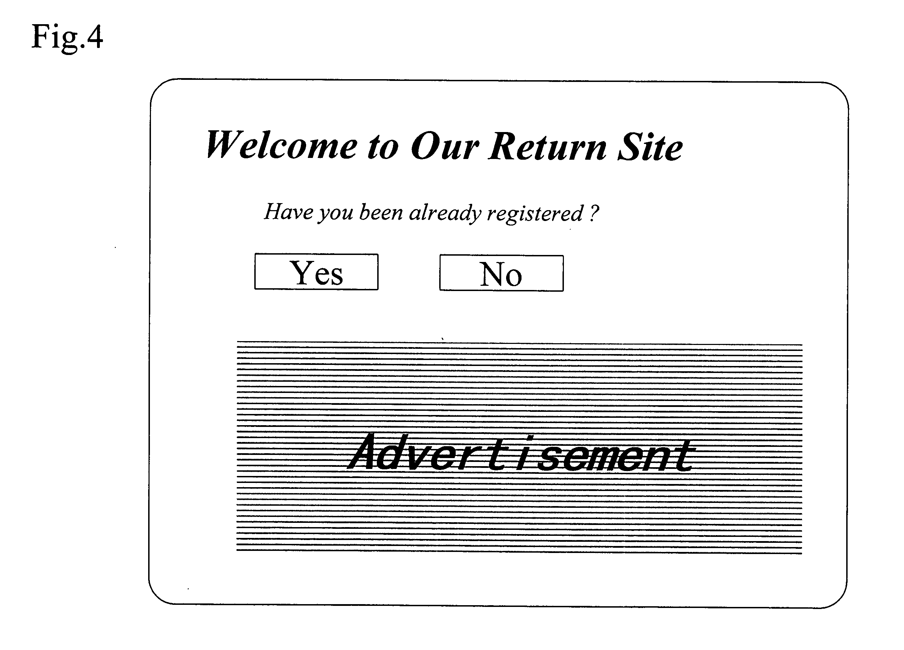

First, when the customer accesses the Web Site created by the Manufacturer Server 2 via the Customer PC 4, data representing the Web Page shown in Figure 4 is sent to the Customer PC 4 from the Manufacturer Server 2. Obviously the Manufacturer Server has a function to make up such a Web Page by using a well-known method, namely VRML, HTML, XML or other known languages.

As shown in the Figure 4, such a Web Page may include some text and pictures for the purpose of advertisement. According to this embodiment, this page shows operable rectangular areas with "Yes" and "No" to be clicked by the customer by using input devices with seeing the displayed page. Since the text "Have you been already registered?" is shown via a display included in the Customer PC 4, "Yes" means that the customer declares his or her registration. In the step S301 of the Figure 3, the Manufacturer Server receives the result of such customer's declaration.

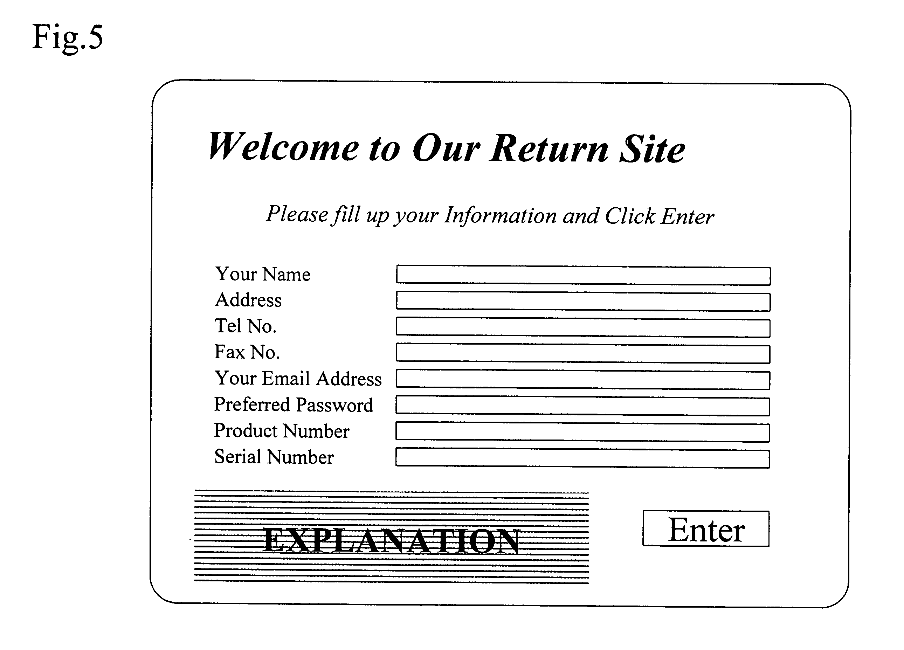

If the customer clicks "No" in a step S301, the process goes to a step S302 for registering the customer's information. In the step S302 the Manufacturer Server 2 automatically prepares the next Web Page as shown in the Figure 5. As shown in the Figure 5, this Web Page is prepared to make the customer input his or her information, including a name, an address, a telephone number, a facsimile number, an email address, a password, a product number of a printer owned by the customer, and a serial number of the printer. Besides, according to the Figure 5, explanation how to fill up such information is described below input columns for this information.

When the customer clicks "Enter" after filling up this information, all of the information shown in Figure 5 is sent to the Manufacturer Server 2 in the step S302. Then the Manufacturer Server 2 checks whether some of the information is proper or not in a step S303. The Manufacturer Server 2 refers to the database for checking whether the input product number actually exists and the input serial number complies with a rule of numbering by checking a number of digits or its order, for example.

If the check executed in the step S303 indicates that the information is proper, the process goes to a step S304. If not, the process goes to a step S311. In the step S311, the Manufacturer Server 2 sends another Web Page to the Customer PC 4 which includes a message that this access is made with improper information. The Web Page sent in the step S311 also includes the message informing of contact information by which the customer knows how to solve this problem. Then the process is finished.

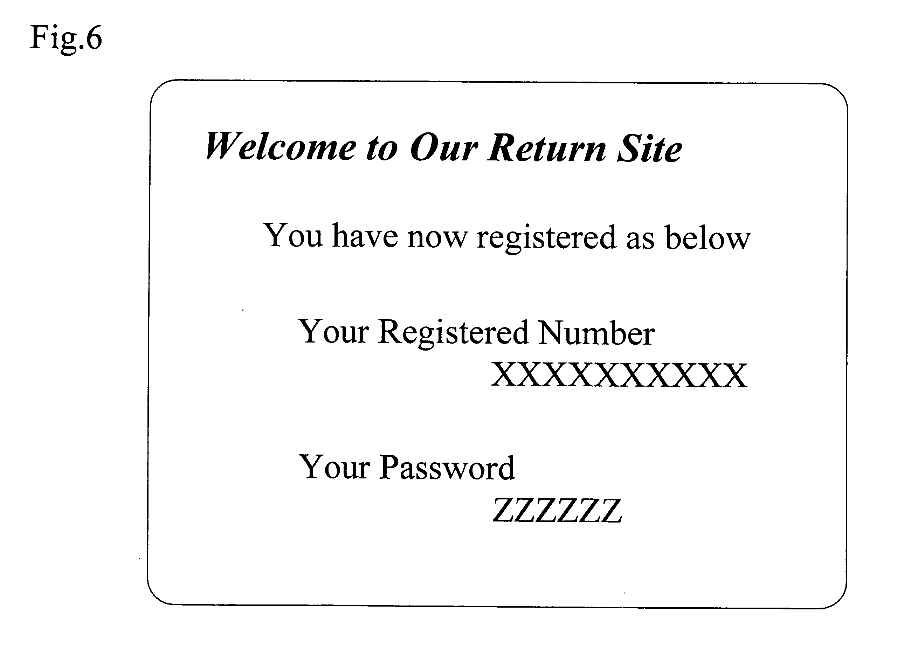

On the other hand, if the information is proper, the Manufacturer Server 2 stores the information sent from the customer into the database 2a in a step S304 and the process goes to a step S305. In the step S305, the Manufacturer Server 2 sends another Web Page as shown in Figure 6 informing that the registration has been done with a registered number of the customer and a corresponding password thereto, and the process goes to a step S306 automatically.

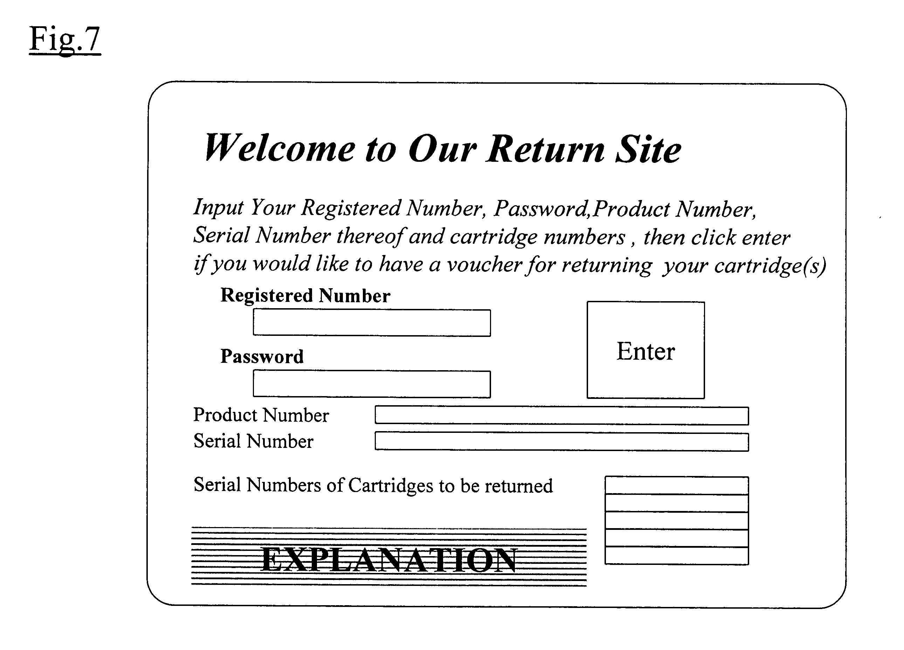

If the customer clicks "Yes" in the step S301, the process goes to the step S306 as well. In the step S306, the Manufacturer Server 2 sends another Web Page as shown in Figure 7 asking the customer to fill up the registered numbers, the password, a product number of a cartridge (a cartridge name), the serial numbers of cartridges to be returned. As shown in Figure 7, explanation how to fill up such information is similarly displayed and described to Figure 5.

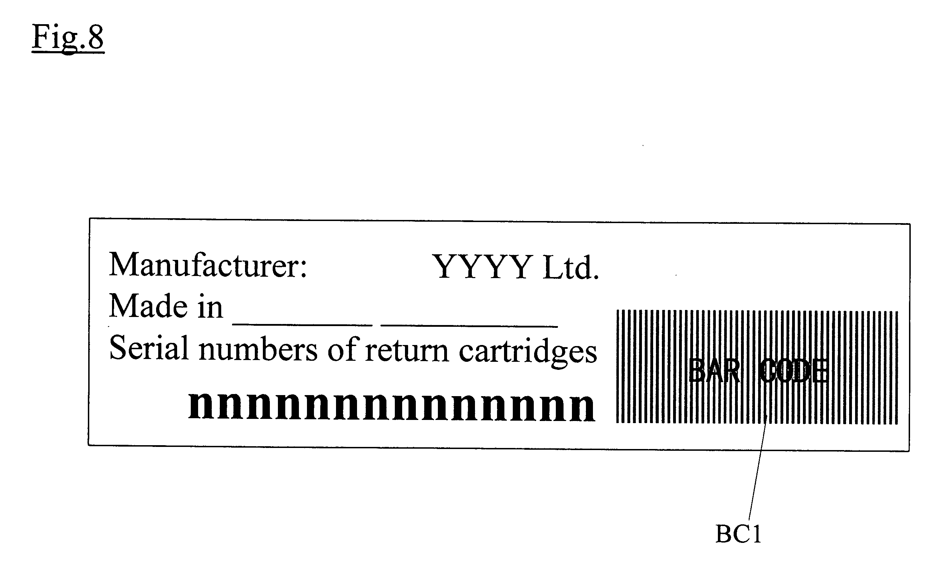

Whilst the customer has to fill up all information shown in Figure 7 in the step S306, the customer can refer to a label shown in Figure 8, which is affixed onto the cartridge. The label affixed onto the cartridge usually shows a name of the manufacturer and a location of manufacturing. In this embodiment, the manufacturer further visibly adds a serial number of the cartridge and adds a barcode BC1 representing information including the cartridge name and the serial number of the cartridge.

In this step S306, it is possible to ask the customer just registered by the steps 303-305 only information excluding the product number and the serial number thereof, since it is supposed that these are not changed.

After the customer fills up the information shown in Figure 7 and clicks "Enter", the Manufacturer Server 2 checks whether the input register number and the password have been registered or not by to referring the database 2a thereof in a step S307. Following the step S307, in a step S308, the Manufacturer Server 2 checks whether the input serial number and the product number are proper or not same as in the step S303. In this step S308, the Manufacturer Server 2 further checks whether the input serial numbers of cartridges are stored (registered) in the database 2a respectively. If each input serial number is registered (stored) in the database 2a, the Manufacturer Server 2 confirms that the input serial number of cartridge is proper. However, if not, the Manufacturer Server 2 realises that each input serial number is improper.

If the input product number, the serial number, and all serial numbers of cartridges to be returned are proper as described above and the customer has already registered with the registered number and a proper password, the process goes to a step S309. Otherwise, the process goes to the step S311 and the process is finished after sending the Web Page including messages as mentioned above.

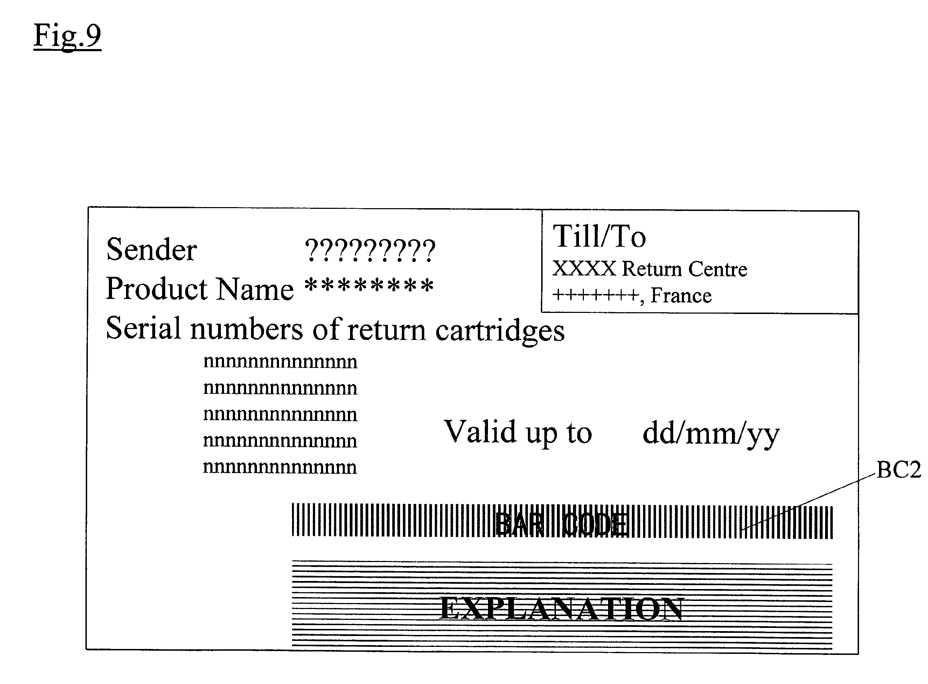

On the other hand, in the step S309, a pre-authorised label to be used for returning cartridges shown in Figure 9 is created in the Manufacturer Server 2. In this step S309, the Manufacturer Server 2 firstly creates certain unique information about the label including a unique number for each label, a date indicating when the label is sent (sending date), and the product number. This information, namely the unique number, the date, and the product number, is supplied to the encoder 2b.

Information including the registered number, a name of the customer as a sender, the product number, serial numbers of the cartridges, and the sending date are also supplied to the label creator 2d. The label creator 2d creates image data as shown in the Figure 9 by using such information. As for a date for expiration, namely the date shown next to the text of "Valid up to", this is calculated by using the sending date. For example, the expiration date is set as a date 2 months after the sending date.

As for the name of the Carrier and the destination shown under the text of "Till/To", these are created in the label creator 2d by referring database 2a to select a suitable Carrier and a suitable destination, namely a plant or recycle centre, based on registered address of the customer input in the step S302.

As for the barcodes, the label creator 2d receives the encoded barcodes BC2 from the BC & WM encoder 2b and simply adds the encoded barcodes BC2 including the information described above, namely the unique number, the expiration date and the product number, on the label as shown in the Figure 9. After adding the encoded barcodes BC2, the image shown in the Figure 9 is once sent to the BC & WM encoder 2b and is encoded to add watermarks for embedding the information described above latently. Finally, the BC & WM encoder 2b sends the watermarked image to the label creator 2d again and the encoded label data is sent to the Customer PC 4 from the Manufacturer Server 2 in the step S309.

Immediately after sending the label data, the Manufacturer Server 2 stores the Label Information as a combination of the unique number, the expiration date, the product number, and serial numbers of cartridges in the step S310 and ends the process.

As described above, the label data sent from the Manufacturer Server 2 includes information to be used for restricting usage of each label. Accordingly, improper usage of the label is effectively prohibited as described later.

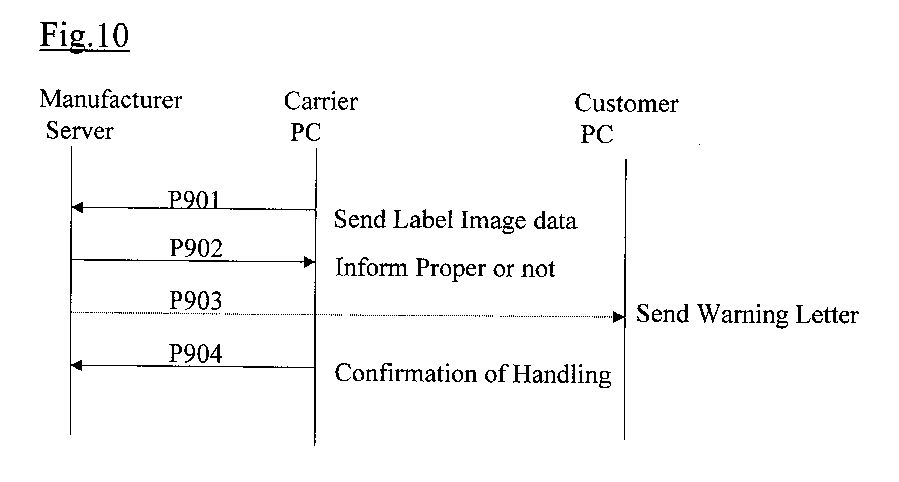

After sending the label data, the customer instructs the Customer PC 4 to send the label data to a printer 5 for printing the label corresponding to the label data. The customer takes the printed label to the carrier. Then, the customer asks the carrier to transport the items to the designated destination displayed on the printed label. Figure 10 shows rough processes taken after the customer asks the carrier to transport for making understanding easy.

The carrier receiving the printed label from the customer firstly scans the printed label as image data by using the scanner 7. The carrier makes the Carrier PC 6 to send the imaged data of the label scanned by the scanner 7 to the Manufacturer Server 2 via the network 1 in a process P901 shown in the Figure 10. The Manufacturer Server 2 checks whether the label is proper to be used or not by using the image data of the label received.

As mentioned above, the image data of the label includes information encoded as the bar codes BC2 and encoded by watermarking. The Manufacturer Server 2 sends the image data received by the Carrier PC 6 to the BC & WM decoder 2c to decode the information including the unique number, the expiration date and the product number. Then the Manufacturer Server 2 checks whether the label to be used is proper or not and sends the checking result to the Carrier PC 6 in a process P902 shown in the Figure 10.

If the Manufacturer Server 2 judges that the label to be used is an improper one, the Manufacturer Server 2 sends a warning letter to the Customer PC 4 by using email system via the network 1 in a process P903. On the other hand, if the Manufacturer Server 2 judges that the label to be used is proper one, the Carrier PC 6 informs the Manufacturer Server 2 to confirm that the carrier handles the consumed items to transport them to the destination shown in the label in a step P904.

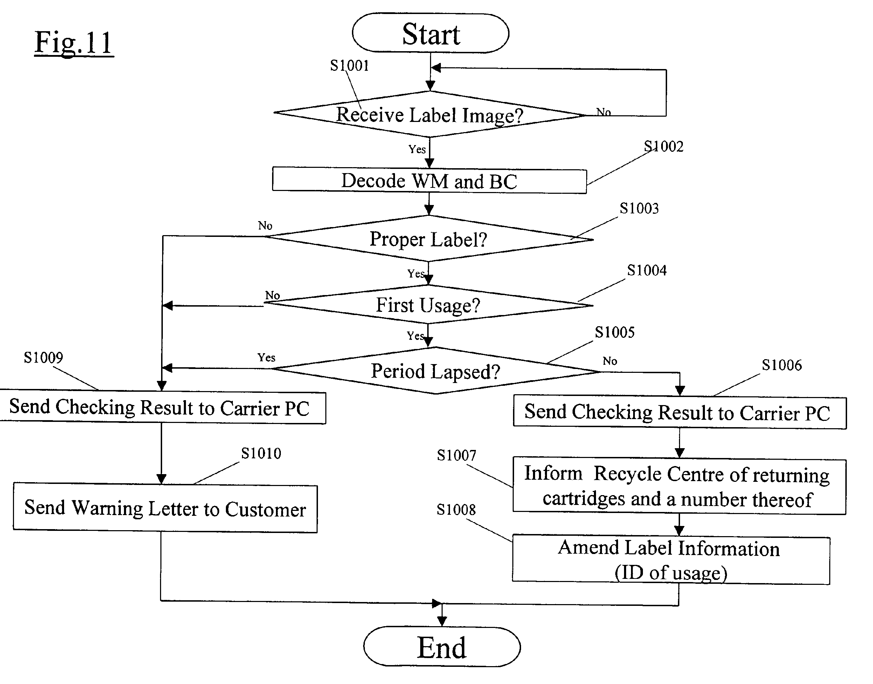

To make these processes carried out in this embodiment detailed, concrete processes carried out in this embodiment are now described by using Figure 11. A flow chart shown in the Figure 11 represents programmes executed in the Manufacturer Server 2.

As shown in the Figure 11, when the Manufacturer Server 2 receives the image data of the label from the Carrier PC 6, the process is shifted from a step S1001 to a step S1002. In the step S1002, the Manufacturer Server 2 sends the image data of the label to the BC & WM decoder 2c. The BC & WM decoder 2c decodes the barcodes BC2 contained in the image data and decodes the watermarks embedded in the image data. The decoder 2c outputs the information including the unique number, the expiration date and the product number.

In accordance with the decoded information, the Manufacturer Server 2 judges whether the label to be used is proper or not in steps S1003, S1004 and S1005. In the step S1003, the Manufacturer Server 2 compares the decoded information obtained from barcodes BC2 with the decoded information obtained from the watermarks. If the decoded information is different from each other, the Manufacturer Server 2 judges that the label to be used is improper, since there is some possibility of modification of the label, especially that the barcodes BC2 are modified. Also in the step S1003, the Manufacturer Server 2 checks whether the combination of the product number and the unique number is stored in the database 2a. If the combination obtained from the decoded information is not stored, the Manufacturer Server 2 judges that the label to be used is improper, since there is some possibility of modification of the label. If the Manufacturer Server 2 judges that the label is improper in the step S1003, the process goes to a step S1009.

On the other hand, if the Manufacturer Server 2 judges that the label is proper in the step S1003, the process goes to a step S1004. In the step S1004, the Manufacturer Server 2 checks, by referring to the database 2a, whether the label having the unique number has been used or not by checking if the unique code has been tagged or not. If it has been used, the Manufacturer Server 2 judges that the label is improper, since it is possible that the label to be used has been copied or modified. If it is judged in the step S1004 that the label is improper, the process goes to the step S1009. If not, the process goes to the step S1005.

The customer and the carrier can see the expiration date shown in the label to be used. Therefore, only the fact that the label data sent from the Manufacturer Server 2 to the Customer PC 4 includes such visible data about the expiration date is effective to prevent from improper usage of the label. For example, even if somebody steels or accidentally finds lost labels, these lost labels cannot be used. Further, this embodiment cares about this kind of usage, even if the carrier overlooks the expiration of the label or the displayed expiration date has been modified.

In the step S1005, the Manufacturer Server 2 checks the expiration date obtained from the image data of the label and judges whether the label is still usable or not. This prevents from improper usage of the label modified or edited. If the expiration date obtained from the image data of the label is gone, the process goes to the step S1009.

In the step S1009, the Manufacturer Server 2 sends the checking result that the label is improper to the Carrier PC 6. Then, the carrier can reject using the improper label. Following the step S1009, the Manufacturer Server 2 also sends the warning letter to the customer corresponding to the unique number to inform that the label sent to the customer may be modified, copied or faked in a step S1010. After the process of the step S1010 is executed, the Manufacturer Server 2 ends the process.

On the other hand, if the label to be used is proper in steps S1003, S1004 and S1005, the process goes to a step S1006. In the step S1006, the Manufacturer Server 2 sends the checking result that the label is proper to the Carrier PC 6. Then, the carrier can accept using the label. Accordingly, usage of the label is authorised and the usage will be carried out. The authorised label is affixed to a box, which contains cartridges to be returned. Therefore, the Manufacturer Server 2 informs the Plant Server 3 of the fact that the products (empty cartridges) will reach the plant or recycle centre in a step S1007. This helps the recycle centre or the plant to control their recycling work.

Following the step S1007, the Manufacturer Server 2 rewrites the database 2a in a step S1008 by tagging the unique code so as to store the fact that the label corresponding to the unique number has been used. This information is used in the step S1004 later. After the step S1008, the process ends.

As described above, any improper usage of the label would be prohibited. Concretely, using modified labels, faked labels, lost labels or copied labels becomes impossible. Accordingly, this embodiment described above resolves the drawback caused by the possibility of modifying, copying, and faking labels, even if the label is sent to the customer as the label data via the network.

Even if the proper label is used at the carrier and cartridges are sent to the recycle centre or plant, there is a further possibility that the recycle centre or plant sometimes receives cartridges from other manufacturers, counterfeit cartridges, or already recycled cartridges. The recycle centre or plant cannot recycle these kinds of cartridges.

It is possible, at the recycle centre or plant, to check if the serial number of cartridge contained in the box is shown on the label. However, such manual check takes time and also it is difficult to find the corresponding box to the cartridge after taking out the cartridges from the box.

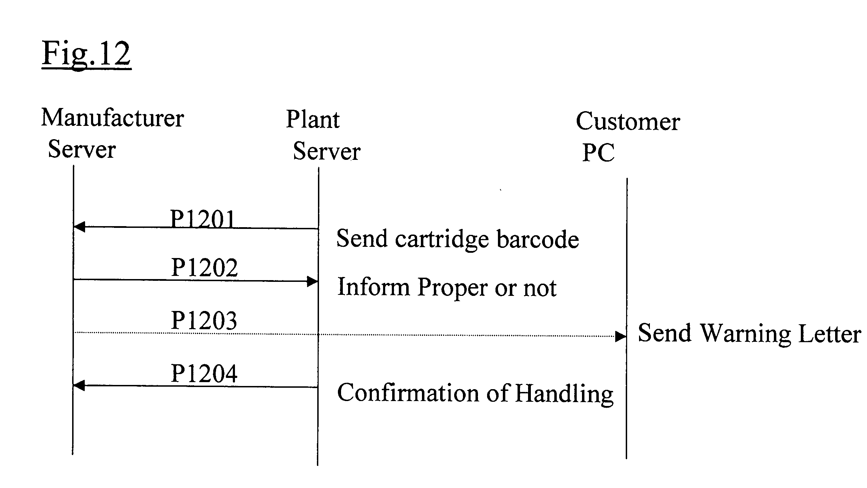

In this embodiment, it is possible to automatically detect that improper cartridges have been returned (False Return) to the recycle centre or plant, to find the customer to be involved in the False Returns, and to warn such customer. Figure 12 shows rough processes taken after the recycle centre or plant receives cartridges for making understanding easy.

The recycle centre or plant firstly takes out cartridges from the box and scans the barcode BC1 by using the barcode reader 8 and obtains serial numbers of returned cartridges. The centre or plant makes the Plant Server 3 to send the serial numbers of cartridges reproduced by the BC reader 8 to the Manufacturer Server 2 via the network 1 in a process P1201 shown in the Figure 12. The Manufacturer Server 2 checks whether the returned cartridges are proper or not by using the reproduced serial numbers.

Then the Manufacturer Server 2 checks whether the serial numbers of returned cartridges are proper or not and sends the checking result to the Plant Server 3 in a process P1202 shown in the Figure 12.

If the Manufacturer Server 2 judges that the returned cartridges are improper, the Manufacturer Server 2 sends a warning letter to the Customer PC 4 by using email system via the network 1 in a process P1203. On the other hand, if the Manufacturer Server 2 judges that the returned cartridges are proper, the Plant Server 3 informs the Manufacturer Server 2 to confirm that the recycle centre or plant proceeds such cartridges for recycling them in a step P1204.

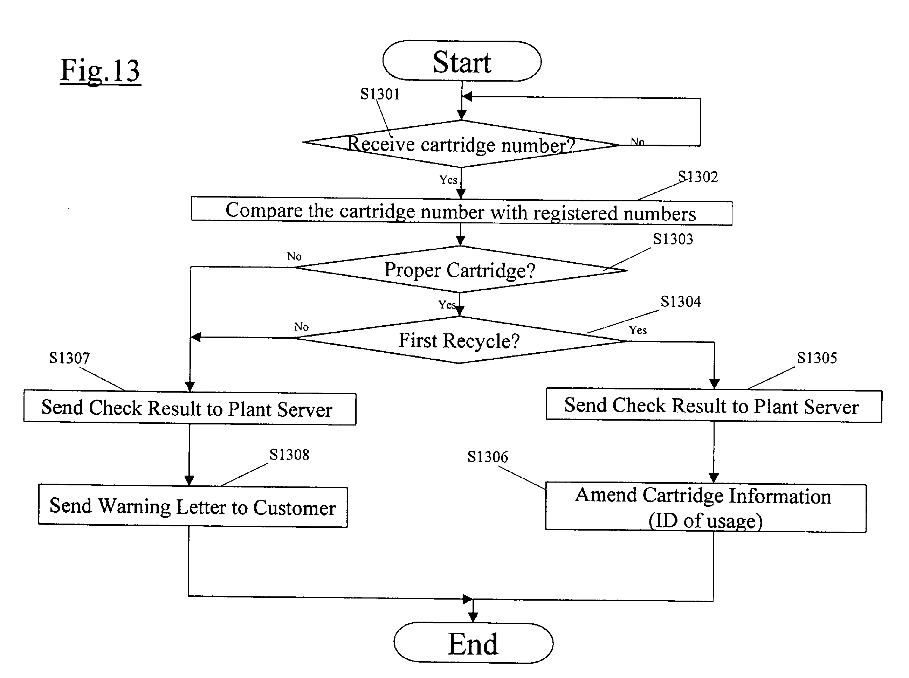

To make these processes carried out in this embodiment detailed, concrete processes carried out in this embodiment are now described by using Figure 13. A flow chart shown in the Figure 13 represents programmes executed in the Manufacturer Server 2.

As shown in the Figure 13, when the Manufacturer Server 2 receives the serial numbers of returned cartridges from the Plant Server 3, the process moves from a step S1301 to a step S1302. In the step S1302, the Manufacturer Server 2 compares the reproduced serial numbers with stored serial numbers in combination with the unique code and the product number. The Manufacturer Server 2 judges whether the reproduced serial numbers are stored with the label data (including the unique code, the product number and the expiration date) or not. If each reproduced serial number is not stored with the label data in the database 2a, it is judged that the returned cartridge is not proper in a step S1303. Of course, in the step S1303, if each reproduced serial number is stored with the label data in the database 2a, it is judged that the returned cartridge is proper.

If the Manufacturer Server 2 judges that the label is proper in the step S1003, the process goes to a step S1304. In the step S1304, the Manufacturer Server 2 checks, by referring to the database 2a, whether the return cartridge having the reproduced serial number has been recycled or not by checking if the serial number stored with the label data has been tagged or not. This can be checked by referring to a tag attached to each of serial numbers, which are stored with the label data. If it has been recycled, the Manufacturer Server 2 judges that the returned cartridge is improper, since it seems that cartridges to be returned have been exchanged, the label has been stolen, or the label has been exchanged or modified. If it is judged in the step S1304 that the returned cartridge is improper, the process goes to the step S1307. If not, the process goes to the step S1305.

The worker in the recycle centre or plant can judge whether the returned cartridge has the expiration date shown in the label to be used. Therefore, only manual detection of the False Return carried out by workers in the recycle centre or plant is effective to prevent from placing such improper cartridge onto the recycling line. For example, even if somebody exchanges cartridges or exchanges both the label and the cartridges, such improperly returned cartridges are not to be placed on the recycle line and are then set apart for destruction or for being sent back.

In the step S1307, the Manufacturer Server 2 sends the checking result to the Plant Server 3. Then, the recycle centre or plant can set apart such improperly returned cartridges for destruction or for being sent back to the customer. Following the step S1307, the Manufacturer Server 2 also sends the warning letter to the customer corresponding to the unique number to inform that the cartridge may be exchanged, the label has been exchanged or stolen in a step S1308. After the process of the step S1308 is executed, the Manufacturer Server 2 ends the process.

On the other hand, if the returned cartridge is proper in steps S1303 and S1304, the process goes to a step S1305. In the step S1305, the Manufacturer Server 2 sends the checking result that the returned cartridges is proper and can be recycled to the Plant Server 3. Then, the recycle centre or plant can place such a cartridge onto the recycling line.

Following the step S1305, the Manufacturer Server 2 rewrites the database 2a in a step S1306 by tagging the serial number stored with the label data so as to store the fact that the cartridge corresponding to the serial number stored with the label data has been recycled. This information is used in the step S1304 later. After the step S1306, the process ends.

As described above, any improper return of the cartridges would not cause a significant problem. Concretely, exchanging cartridges, exchanging the labels, or steeling the label becomes not so big problem, even if once cartridges are taken out from the box and it become impossible to find the label for such cartridges.

In the embodiment described above, the BC & WM decoder 2c is located in the Manufacturer Server 2. However, there is another option that the BC & WM decoder 2c is located in the Carrier PC 6 by sending a decoding programme from the Manufacturer Server 2 to the Carrier PC 6 or by installing such a program. In this option, installing or sending a programme to each of the Carrier PCs would be necessary and this causes some workloads. However, in terms of corresponding time, this option has an advantage. Because, if the Carrier PC can decode BC and WM, only the decoded information is transferred from the Carrier PC 6 to the Manufacturer Server 2. Therefore, the corresponding time is reduced.

The above-described embodiments restrict the usage of the printed label by checking all of whether the label is expired, whether the label has been used, and whether the label is proper. However, a system, a programme and a device in which one kind of checking is carried out for restricting the usage of the label are within the scope of this invention.

Although limited embodiments are only described in the specification, it is possible to change the embodiments to the extent of the scope of claims.

As described above, this invention creates or introduces a system, programme or device which gives advantages as follows.

The manufacturer does not have to make sure about customers' locations and suitable carrier service at the timing of shipping new cartridges and to enclose suitable labels for each cartridge. This reduces workload and relating costs.

It becomes unnecessary for the manufacturer to send a new label upon request of the customer to its new location or for the customer to bring his or her consumed cartridges to the carrier located close to the previous location of the customer. This also reduces significant workload on both manufacturers and customers and can encourage returning items.

The damage on both manufacturers and carriers caused by the modified label, the copied label or the faked label can be avoided without significant increase of costs and workloads. Also the damage on both manufacturer and the recycle centre or plant caused by the exchanged cartridge, the exchanged label or the stolen label, namely False Return, can be significantly reduced.

This invention introduces, as one aspect, a system for handling data to be used for returning items, which comprises means for creating label data representing a label to be printed for returning an item from a customer, the label data including unique data, means for sending the label data to a customer, means for receiving identification data identifying an item to be returned by the customer, means for storing the identification data in association with the unique data, means for receiving identifying data from a returned item, means for checking the received identifying data from the returned item to decide whether the returned item is proper or not by referring to the identification data stored in said storing means, and means for calling the unique data associated with the identification data if said checking means decides that the returned item is improper. Accordingly, usage of the label copied, modified, stolen, exchanged or faked would be significantly minimised with a little additional cost. Further, checking identification of a returned item, the problem caused by transferring other items or fake items can be solved.

## Claims

1. A system for handling data to be used for returning items; comprising
means for creating label data representing a label to be printed for returning an item from a customer, the label data including unique data;
means for sending the label data to a customer;
means for receiving identification data identifying an item to be returned by the customer;
means for storing the identification data in association with the unique data;
means for receiving identifying data from a returned item;
means for checking the received identifying data from the returned item to decide whether the returned item is proper or not by referring to the identification data stored in said storing means; and
means for calling the unique data associated with the identification data if said checking means decides that the returned item is improper.

2. A system according to claim 1, wherein the label data further includes customer data regarding the customer and said calling means calls the customer data together with the unique data.

3. A system according to claim 2, further comprising means for sending a message to warn the customer by using the customer data corresponding to the identifying data checked by said checking means as the returned item corresponding to the identifying data is improper.

4. A system according to any one of claims 1-3, further comprising means for sending the decision made by said checking means to a place where the returned items are handled so that the returned item is to be recycled.

5. A system according to any one of claims 1-4, wherein said checking means checks the received identifying data from the returned item to decide whether the identification data corresponding thereto is stored in said storing means or not.

6. A system according to claim 5, wherein said checking means further checks whether the returned item has been previously returned or not by referring to the identification data stored in said storing means

7. A system according to claim 6, wherein said storing means stores identification data with a tag representing whether each item has been returned or not; and further comprising renewing means for renewing the tag stored in said storing means in response to the decision that the returned item is proper.

8. A set of computer programmes for handling data to be used for returning items; comprising
programme for creating label data representing a label to be printed for returning an item from a customer, the label data including unique data;
programme for sending the label data to a customer;
programme for receiving identification data identifying an item to be returned by the customer;
programme for storing the identification data in association with the unique data in a storage;
programme for receiving identifying data from a returned item;
programme for checking the received identifying data from the returned item to decide whether the returned item is proper or not by referring to the identification data stored by the storage; and
programme for calling the unique data associated with the identification data if said checking programme decides that the returned item is improper.

9. A set of computer programmes according to claim 8, wherein the label data further includes customer data regarding the customer and said calling programme causes to call the customer data together with the unique data.

10. A set of computer programmes according to claim 9, further comprising programme for sending a message to warn the customer by using the customer data corresponding to the identifying data checked by said checking programme as the returned item corresponding to the identifying data is improper.

11. A set of computer programmes according to any one of claims 8-10, further comprising programme for sending the decision made by said checking programme to a place where the returned items are handled so that the returned item is to be recycled.

12. A set of computer programmes according to any one of claims 8-11, wherein said checking programme causes to check the received identifying data from the returned item to decide whether the identification data corresponding thereto is stored in the storage or not.

13. A set of computer programmes according to claim 12, wherein said checking programme further causes to check whether the returned item has been previously returned or not by referring to the identification data stored in the storage

14. A set of computer programmes according to claim 13, wherein said storing programme causes to store identification data with a tag representing whether each item has been returned or not in the storage; and further comprising programme for renewing the tag stored in the storage in response to the decision made by said checking programme that the returned item is proper.

15. A device for handling data to be used for returning items; comprising
a label creator for creating label data representing a label to be printed for returning an item from a customer, the label data including unique data;
a sender for sending the label data to a customer;
a receiver for receiving identification data identifying an item to be returned by the customer;
a storage for storing the identification data in association with the unique data;
a receiver for receiving identifying data from a returned item;
a checker for checking the received identifying data from the returned item to decide whether the returned item is proper or not by referring to the identification data stored in said storage; and
a caller for calling the unique data associated with the identification data if said checker decides that the returned item is improper.
